# EUROPEAN PATENT APPLICATION

(11) **EP 4 119 385 A1**
(43) Date of publication of application: **18.01.2023**
(21) Application number: 21185136.5
(22) Date of filing: 12.07.2021
(51) Int. Cl.: B60L 50/64, B60L 58/19, B60L 58/21, B60L 58/22, H02J 7/00

(54) **BATTERY SYSTEM, RANGE OF ELECTRIC VEHICLES AND USE OF A BATTERY SYSTEM**

(71) Applicant: Volvo Construction Equipment AB, 631 85 Eskilstuna (SE)
(72) Inventor: NEDJIMI, Ahcene, 69003 LYON (FR)
(74) Representative: Plasseraud IP

(57) **Abstract**

Battery system (5) presenting a plurality of configurations in which elementary battery modules (6) are arranged respectively in different configurations with different voltages and energy capacities, each configuration matching with at least one electric requirement of a range of electric vehicles, the elementary battery modules (6) of each configuration being arranged in a string number of strings (7) connected in parallel to each other, each string (7) comprising a module number of elementary battery modules (6), the configuration having a configuration voltage and a configuration energy capacity, wherein each string (7) further includes a first electronic control unit for balancing a state of charge of each elementary battery module (6) within said string (7), and wherein the battery system (5) further includes at least one second electronic control unit for balancing a state of charge of the strings (7) relative to each other.

## Description

### Technical Field

This disclosure pertains to the field of electro-mobility.

This disclosure specifically relates to a battery system, a range of electric vehicles comprising such battery system and a use of such battery system.

### Background Art

Electro-mobility, including electrification of vehicles, plays an important role on the way towards a carbon neutral society.

Electro-mobility is changing vehicles not only in the automotive and commercial industries but also in construction industry. In this respect, the applicant intends to launch an electric range of compact wheel loaders and compact excavators in replacement of at least a part of diesel engine ones.

In electro-mobility, a battery system as energy source is a key technology. The battery system includes one or several battery modules, generally of lithium ion type.

A battery module with voltage of 48 V is largely adopted to mild hybrid vehicle for low voltage implementations, usually defined in the automotive or commercial industries as applications requiring voltages lower than 30 V AC or lower than 60 V DC. For high voltage implementations, usually defined in the automotive or commercial industries as applications requiring voltages between 60 V DC and 1500 V DC or between 30 V AC rms and 1000 V AC rms, battery modules with voltage of 400 V are implemented for hybrid technology of passenger vehicles while battery modules with voltage like 600 V and 850 V are implemented for commercial vehicles, such as buses or trucks. These voltages lie within the voltage class B.

Since construction machines of the construction industry are now shifting to electric, a known strategy consists in reusing existing technologies of energy source from automotive or commercial industries. This would imply using a battery module with a low voltage of 48 V for low voltage implementations with a high voltage of 400 V and 600 V would be used for high voltage implementations, such as off road implementations.

However this strategy presents some limits. Indeed, the battery modules are configured, both in shape and energy capacities, based on the automotive or commercial applications. This becomes a problem when it has to be dealt with various models of construction machines like compact wheel loaders and compact excavators which have each their own construction and electric requirements that differ from each other and from that of the automotive and commercial industries. Mechanical integration and electric requirements do not necessarily match with the standard 400V or 600V battery module solution.

### Summary

This disclosure improves the situation.

It is proposed a battery system to power up a range of electric vehicles each having an electric requirement chosen at least between a voltage requirement and an energy requirement, the battery system comprising a plurality of elementary battery modules, each elementary battery module comprising a plurality of battery cells, wherein each elementary battery module has a nominal voltage Ve and a nominal energy capacity Ee, wherein the battery system presents a plurality of configurations in which the elementary battery modules are arranged respectively in different configurations with different voltages and energy capacities, each configuration matching with at least one of the electric requirements of the range of electric vehicles, each configuration comprising a number Mc of elementary battery modules, the elementary battery modules of each configuration being arranged in a string number Ns of strings connected in parallel to each other, each string comprising a module number Nm of elementary battery modules, the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee,
wherein each string further includes a first electronic control unit for balancing a state of charge of each elementary battery module within said string, and
wherein the battery system further includes at least one second electronic control unit for balancing a state of charge of the strings relative to each other.

The invention proposes a modular architecture of the battery system relying on a single kind of elementary battery module used as a base in a scalable elementary battery module solution. The invention consists in packing the identical elementary battery modules in series in each string to reach a targeted voltage, and strings in parallel to reach a targeted energy capacity.

Thanks to the adaptability of the battery system, a large number of different configurations can be obtained without requiring substantial developments and the associated time and costs. Wide ranges of configuration voltages and configuration energy capacities at low cost can be rapidly obtained. In addition, within such wide ranges, configuration voltages and configuration energy capacities can easily be chosen to be compatible with operating voltages of different systems involved in the field of electric vehicles, such as DC-DC inverter or onboard charger of the electric vehicle, or charging stations for charging the battery system.

The elementary battery module is chosen to present small dimensions, making it easier to integrate the battery system in any available space of the vehicle, possibly at separate locations. The battery system of the invention offers an enhanced adaptability enabling to meet not only the different electric requirements of the range of electric vehicles but also the different available spaces of this range of electric vehicle.

In another aspect, it is proposed a range of electric vehicles comprising a battery system as defined previously, wherein each electric vehicle has an electric requirement chosen at least between a voltage requirement and an energy requirement, wherein the battery system presents a plurality of configurations each matching with at least one of the electric requirements of the range of electric vehicles.

The electric vehicles may be construction machines, such as excavators and wheel loaders, the voltage requirements of said construction machines being chosen between 500 V and 750 V and the energy requirements of said construction machines being chosen between 30 kWh and 150 kWh.

In another aspect, it is proposed a use of a battery system as defined previously to power up a range of electric vehicles each having an electric requirement chosen at least between a voltage requirement and an energy requirement, comprising:
- determining the electric requirement of at least one of the electric vehicles,
- choosing one of the plurality of configurations matching with the electric requirement of said electric vehicle, said configuration comprising a configuration number Mc of elementary battery modules, the elementary battery modules of said configuration being arranged in a string number Ns of strings connected in parallel to each other, each string comprising a module number Nm of elementary battery modules, the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee.

The use may further comprises:
- determining available space within the electric vehicle,
- arranging the elementary battery modules according to the available space.

### Brief Description of Drawings

Other features, details and advantages will be shown in the following detailed description and on the figures, on which:

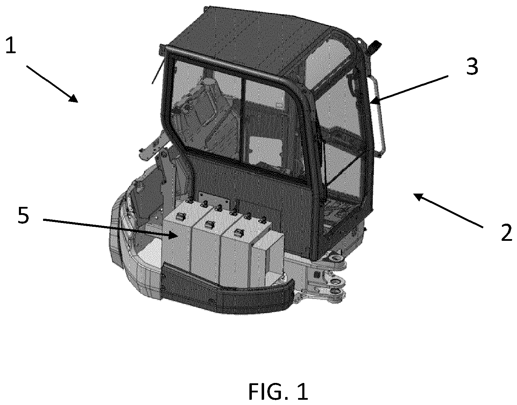

- figure 1 is a partial representation in perspective of an electric vehicle implementing a battery system according to an embodiment of the invention, the electric vehicle being a construction machine of the construction industry belonging to a range of electric vehicles having each an electric requirement chosen at least between a voltage requirement and an energy requirement,

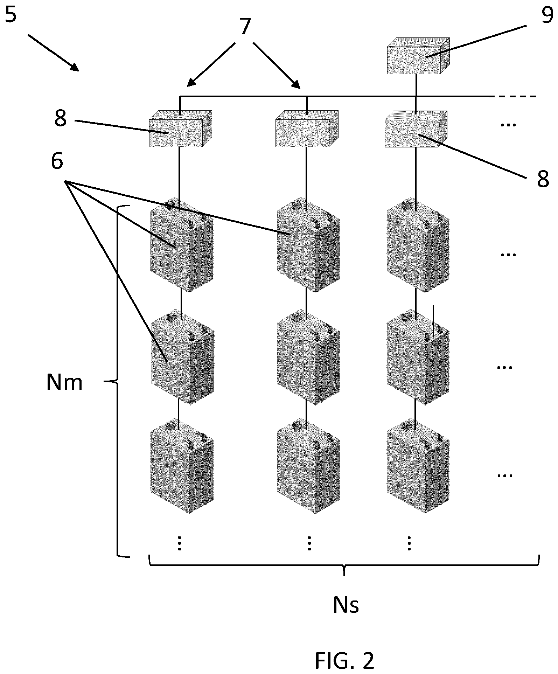

- figure 2 is a schematic representation of the battery system of the electric vehicle of figure 1, the battery system having a configuration of identical elementary battery modules matching with the electric requirements of the electric vehicle, the configuration comprising Ns strings connected in parallel to each other, each string comprising Nm elementary battery modules connected in series with a first electronic control unit, the first electronic control unit being connected to a second electronic control unit,

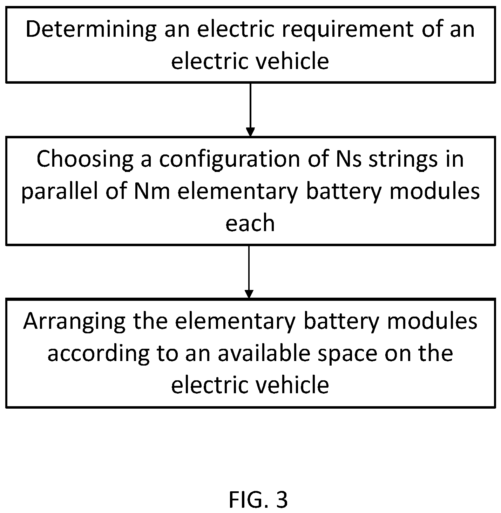

- figure 3 is a flowchart illustrating a use of use of the battery system of figure 2.

### Description of Embodiments

Figure 1 represents a portion of an electric vehicle according to an embodiment of the invention. The electric vehicle belongs to a range of electric vehicles having each an electric requirement chosen at least between a voltage requirement and an energy requirement.

In the represented embodiment, the electric vehicle is a construction machine 1 of the construction industry. More specifically, figure 1 illustrates an upper portion 2, including a cabin 3, of a compact wheel loader or compact excavator. The electric vehicle could however be any other electric vehicle belonging to a range of electric vehicles, possibly of the automotive or commercial industries, such as a passenger car, a truck, a bus or other.

Such range of construction machines 1 has voltage requirements ranging from 500 V to 750 V, and energy requirements ranging from 30 kWh to 150 kWh. To meet such voltage and/or energy requirements, a battery system 5 as shown in figure 2 is implemented.

The battery system 5 comprises several elementary battery modules 6. The elementary battery modules 6 are identical and hence have same dimensions and same number of battery cells providing a same nominal voltage Ve and a same nominal energy capacity Ee.

As represented on figure 2, the elementary battery modules 6 are arranged in one of a plurality of configurations in which the elementary battery modules 6 are connected in series in respective strings 7, which strings 7 are connected in parallel to each other.

Each configuration comprises an arrangement of elementary battery modules 6 to have a configuration voltage Vc and a configuration energy capacity Ec which match at least one of the electric requirement chosen between voltage and energy requirements of at least one of the construction machine of the range of construction machines. In particular, each configuration comprises a number Mc of elementary battery modules 6, a string number Ns of strings 7 connected in parallel to each other and a module number Nm of elementary battery modules 6 per string 7, such that Ns ≥ 2, Nm ≥ 2 and Ns × Nm = Mc. Hence, the configuration voltage is Vc = Nm × Ve and the configuration energy capacity is Ec = Mc × Ee.

Each string 7 further includes a first electronic control unit (ECU) included in a main power box 8 for balancing a state of charge of each elementary battery module 6 within this string 7. The configuration is completed with one or several second electronic control units for balancing a state of charge of the strings 7 relative to each other. Balancing the state of charge within each string 7 or between the strings 7 can be done actively, the elementary battery modules 6 being connected and under charge, or passively, the elementary battery modules 6 being disconnected. The second electronic control unit operates is part of a control box 9 made with a master battery management unit that drives all the elementary battery modules 6 acting as "slaves" with respect to elementary battery modules 6 balancing, connection and disconnection. The control box 9 may also include a pre-charge function for the whole battery system 5 in addition to contactors and related fuses. The control box 9 acts as a main interface between the strings 7 of elementary battery modules 6 and the construction machine 1. When overall configuration voltage is above 60 V, the control box 9 may also have a safety function as a high voltage interlock loop.

In relation with figure 3, a use of the battery system 5 is now disclosed. The following description made in relation with the battery system 5 used to power up the range of construction machines 1 as discussed previously. This description is however transposable to any range of electric vehicles of other kind, especially to any range of electric vehicles of the automotive or commercial industries.

At first, the electric requirement of at least one of the construction machines 1 is determined. The electric requirement may be the voltage requirement and/or the energy requirement or any other requirement in relation with the electric operation of the construction machine 1.

Then, for each construction machine 1 of the range, one of the plurality of configurations matching with the electric requirement of the construction machine is chosen. In particular, the number Mc as well as the module number Nm and the string number Ns are chosen to reach the configuration voltage Vc = Nm × Ve and the configuration energy capacity Ec = Mc × Ee matching the corresponding electric requirement of the construction machine 1.

In an example provided for a purely illustrative and non-limitative purpose, the steps previously disclosed can be implemented with elementary battery modules 6 having each a nominal voltage Ve of 48 V and a nominal energy capacity Ee of 5 kWh. Then according to the targeted energy capacity, the elementary battery modules 6 are packed:
- in series which will lead to the strings of a certain voltage: for example, 10 elementary battery modules 6 in series will result in a string 7 having a voltage of 480 V and an energy capacity of 50 kWh, and
- in parallel to extend the energy capacity and meet the targeted energy capacity: for example, 2 strings 7 of 10 elementary battery modules 6 will result in a configuration voltage of 480 V and a configuration energy capacity of 100 kWh.

The module number Nm of elementary battery modules 6 per string 7 and the string number of strings 7 may also depend on the control box 9 ability to manage the number of elementary battery modules 6. For example, with the elementary battery module 6 having the nominal voltage Ve of 48 V and the nominal energy capacity Ee of 5 kWh, the module number Nm may be up to 15, totalizing up to 75 kWh for the energy capacity of each string and 720 V for the voltage of each string, and the string number Ns may be up to 10 totalizing up to 750Kwh for the configuration energy capacity and 720V for the configuration voltage.

Still for a purely illustrative and non-limitative purpose, in the table below, the configurations with elementary battery modules 6 having each the nominal voltage Ve of 48 V and the nominal energy capacity Ee of 5 kWh are provided for four construction machines 1 having different voltage and energy requirements.

**Table**

| Construction machine | 1 | 2 | 3 | 4 |
|---|---|---|---|---|
| Energy capacity required for 4h autonomy (kWh) | 64.6 | 90.8 | 86.0 | 110,0 |
| Configuration (s= modules in series, p= strings in parallel, MB = main power box including the first ECU) | [8s2p] + 2 MB 65,6 kWh, 408 V | [11s2p] + 2 MB 90 kWh, 562 V | [11s2p] + 2 MB 90 kWh, 562 V | [13s2p] + 2 MB 106,6 kWh, 664 V |

As shown in figure 1, once the configuration has been set, the available space within the construction machine 1 can be determined and the elementary battery modules 6 can be arranged according to the available space, being possibly dispatched at separate locations and connected to each other by wires.

## Claims

1. Battery system (5) to power up a range of electric vehicles each having an electric requirement chosen at least between a voltage requirement and an energy requirement, the battery system (5) comprising a plurality of elementary battery modules (6), each elementary battery module (6) comprising a plurality of battery cells, wherein each elementary battery module (6) has a nominal voltage Ve and a nominal energy capacity Ee, wherein the battery system (5) presents a plurality of configurations in which the elementary battery modules (6) are arranged respectively in different configurations with different voltages and energy capacities, each configuration matching with at least one of the electric requirements of the range of electric vehicles, each configuration comprising a number Mc of elementary battery modules (6), the elementary battery modules (6) of each configuration being arranged in a string number Ns of strings (7) connected in parallel to each other, each string (7) comprising a module number Nm of elementary battery modules (6), the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee,
wherein each string (7) further includes a first electronic control unit for balancing a state of charge of each elementary battery module (6) within said string (7), and
wherein the battery system (5) further includes at least one second electronic control unit for balancing a state of charge of the strings (7) relative to each other.

2. Range of electric vehicles comprising a battery system (5) according to claim 1, wherein each electric vehicle has an electric requirement chosen at least between a voltage requirement and an energy requirement, wherein the battery system (5) presents a plurality of configurations each matching with at least one of the electric requirements of the range of electric vehicles.

3. Range of electric vehicles according to claim 2, wherein the electric vehicles are construction machines (1), such as excavators and wheel loaders, the voltage requirements of said construction machines (1) being chosen between 500 V and 750 V and the energy requirements of said construction machines (1) being chosen between 30 kWh and 150 kWh.

4. Use of a battery system (5) according to claim 1 to power up a range of electric vehicles each having an electric requirement chosen at least between a voltage requirement and an energy requirement, comprising:
- determining the electric requirement of at least one of the electric vehicles,
- choosing one of the plurality of configurations matching with the electric requirement of said electric vehicle, said configuration comprising a configuration number Mc of elementary battery modules (6), the elementary battery modules (6) of said configuration being arranged in a string number Ns of strings (7) connected in parallel to each other, each string (7) comprising a module number Nm of elementary battery modules (6), the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee.

5. Use of a battery system (5) according to claim 4, further comprising:
- determining available space within the electric vehicle,
- arranging the elementary battery modules (6) according to the available space.
